Europäisches Patentamt

European Patent Office

Office européen des brevets

(19)

(11) EP 0 495 706 B1

(12) FASCICULE DE BREVET EUROPEEN

(45) Date de publication et mention
de la délivrance du brevet:
**14.05.1997 Bulletin 1997/20**

(51) Int Cl.$^6$: **G06F 7/58**, H04N 7/167

(21) Numéro de dépôt: **92400090.4**

(22) Date de dépôt: **14.01.1992**

(54) **Générateur d'octets pseudo-aléatoires**

Pseudo-Zufallsbytegenerator

Pseudo-random byte generator

(84) Etats contractants désignés:
**DE ES GB IT**

(30) Priorité: **16.01.1991 FR 9100440**

(43) Date de publication de la demande:
**22.07.1992 Bulletin 1992/30**

(73) Titulaires:
• **FRANCE TELECOM**
**92131 Issy les Moulineaux (FR)**
• **TELEDIFFUSION DE FRANCE**
**75932 Paris Cédex 15 (FR)**

(72) Inventeurs:
• **Angebaud, Didier**
**F-35135 Chantepie (FR)**

• **Giachetti, Jean-Luc**
**F-35000 Rennes (FR)**
• **Lenoir, Vincent**
**F-35650 Le Rheu (FR)**

(74) Mandataire: **Signore, Robert et al**
**c/o BREVATOME**
**25, rue de Ponthieu**
**75008 Paris (FR)**

(56) Documents cités:
**EP-A- 0 014 652**      **EP-A- 0 083 998**
**EP-A- 0 115 097**      **FR-A- 2 239 817**

**Description**

La présente invention a pour objet un générateur pseudo-aléatoire. Elle trouve une application dans tous les cas où l'on veut chiffrer et/ou déchiffrer une suite d'octets. Il peut s'agir notamment des systèmes dits à contrôle d'accès utilisés en télévision à péage.

La demande de brevet français FR-A-2 448 824 décrit un système de vidéographie dans lequel les données sont verrouillées octet par octet à l'aide d'octets chiffrants délivrés par un générateur pseudo-aléatoire. Ce générateur est constitué par un ensemble de bascules et de portes OU-exclusif. Un tel générateur possède des performances médiocres lorsqu'il est implanté en logiciel. A titre indicatif, il faut environ 6 secondes pour déchiffrer une page télévisée contenant 1 kilo-octet.

Le brevet européen EP-A-0 083 998 (brevet américain correspondant US-A-4 543 559) décrit un générateur pseudo-aléatoire plus performant, notamment plus rapide, sans être plus complexe. Par ailleurs, la période de la suite pseudo-aléatoire engendrée est augmentée jusqu'à environ $2,3.10^{30}$ octets. Pour cela, le générateur comprend une entrée d'initialisation et trois sous-ensembles constitués chacun de portes logiques OU-exclusif, de divers registres et d'un additionneur. Ces sous-ensembles définissent trois suites récurrentes. Un circuit logique de sortie permet de combiner différents bits apparaissant dans ces trois sous-ensembles. Ce circuit logique délivre 5 bits qui constituent les 5 bits de poids faible d'un octet chiffrant, les bits 6 et 7 étant forcés à 0 et le 8ème bit étant un bit de parité calculé par un additionneur.

Bien que donnant satisfaction à certains égards, ce générateur présente l'inconvénient de ne délivrer que 5 oits pseudo-aléatoires.

La présente invention a pour objet un générateur plus performant en ce sens qu'il délivre 8 bits pseudo-aléatoires, c'est-à-dire un octet complet.

Par ailleurs, la période de la suite pseudo-aléatoire engendrée est encore augmentée.

A cette fin, le générateur de l'invention tel que défini dans la revendication 1 comprend quatre sous-ensembles (au lieu de 3), ces sous-ensembles étant fondés respectivement sur quatre polynomes irréductibles Q, R, S et T de la forme :

Q : $X^5 = 15X^2 + 30$ défini sur le corps de GALOIS d'ordre 31,
R : $X^7 = X + 15$ défini sur le corps de GALOIS d'ordre 31,
S : $X^5 = 2X^2 + 125$ défini sur le corps de GALOIS d'ordre 127,
T : $X^7 = 2X + 125$ défini sur le corps de GALOIS d'ordre 127.

Chaque sous-ensemble délivre des séquences avec des périodicités respectives Tq, Tr, Ts, Tt égales à :

$$Tq = (31^5 - 1)/15 = 2.5.11.17351,$$

$$Tr = (31^7 - 1)/3 = 2.5.917087137,$$

$$Ts = (127^5 - 1)/g = 2.7.262209281,$$

$$Tt = (127^7 - 1)/9 = 2.7^2.43.86353.162789.$$

Le générateur complet, qui combine ces quatre polynomes, engendre des séquences d'octets dont la périodicité est égale au plus petit commun multiple de Tq, Tr, Ts et Tt, ce plus petit commun multiple ayant pour valeur $1,36.10^{37}$.

De façon précise, l'invention a pour objet un générateur pseudo-aléatoire du genre de ceux qui comprennent :

- un circuit d'initialisation apte à recevoir un octet d'initialisation et à délivrer différents mots d'initialisation constitués par différentes sélections des bits formant l'octet d'initialisation,
- un circuit de calcul formé de différents sous-ensembles constitués chacun par des registres à entrées-sorties parallèles, un additionneur et des portes logiques OU-exclusif, interconnectés en cascade formant un rebouclage pour définir une suite récurrente fondée sur un polynome générateur irréductible prédéfini, chaque sous-ensemble ayant une entrée recevant l'un des mots d'initialisation et des sorties délivrant certains bits de certains registres du sous-ensemble,
- un circuit logique de sortie possédant des entrées reliées aux sorties des différents sous-ensembles et comprenant

EP 0 495 706 B1

des portes logiques aptes à effectuer des opérations logiques sur les bits provenant des différents sous-ensembles , ce circuit de sortie délivrant une suite pseudo-aléatoire de mots,
- une horloge délivrant des impulsions commandant les différents registres.

Selon l'invention, ce générateur est caractérisé par le fait que :

A) le circuit d'initialisation délivre 4 mots d'initialisation, le premier de 5 bits, le deuxième de 5 bits, le troisième de 7 bits, le quatrième de 7 bits,

B) le circuit de calcul comprend :

- un premier sous-ensemble comprenant 5 registres de 5 bits, soit Qo, Q1, Q2, Q3, Q4, ce premier sous-ensemble recevant le premier mot d'initialisation et correspondant à un polynome générateur égal à $X^5=15X^2+30$ sur un corps de GALOIS de module 31,
- un deuxième sous-ensemble comprenant 7 registres de 5 bits, soit Ro, R1, R2, R3, R4, R5, R6, ce deuxième sous-ensemble recevant le deuxième mot d'initialisation et correspondant à un polynome générateur égal à $X^7=X+15$ sur un corps de GALOIS de module 31,
- un troisième sous-ensemble comprenant 5 registres de 7 bits, soit So, S1, S2, S3, S4, ce troisième sous-ensemble recevant le troisième mot d'initialisation et correspondant à un polynome générateur égal à $X^5=2X^2+125$ sur un corps de GALOIS de module 127,
- un quatrième sous-ensemble comprenant 7 registres de 7 bits, soit To, T1, T2, T3, T4, T5, T6, ce quatrième sous-ensemble recevant le quatrième mot d'initialisation et correspondant à un polynome générateur égal à $X^7=2X+125$,

l'état Xn du générateur à un instant défini par une impulsion d'horloge n étant défini par le contenu de tous les registres à savoir respectivement :

- 1er sous-ensemble : Q0, Q1, Q2, Q3, Q4
- 2ème sous-ensemble : R0, R1, R2, R3, R4, R5, R6
- 3ème sous ensemble : S0, S1, S2, S3, S4
- 4ème sous ensemble : T0, T1, T2, T3, T4, T5, T6

les moyens composant ces 4 sous-ensembles étant par ailleurs interconnectés de telle sorte que l'état Xn+1 du générateur à l'instant n+1 devienne :

1er sous-ensemble :
Q1, Q2, Q3 $\oplus$ Q1, Q4, (16 $\overline{\overline{Q2}}$ + $\overline{Q0}$)mod 31,
2ème sous-ensemble :
R1, R2 $\oplus$ RI, R3, R4, R5, R6, (R1 + 16 $\overline{R0}$)mod 31,
3ème sous-ensemble :
S1, S2, S3$\oplus$SI, S4, ((2 S2 + 2 $\overline{\overline{S0}}$)mod 127),
4ème sous-ensemble :
T1, T2 $\oplus$ TI, T3, T4, T5, T6, (2 T1 + 2 $\overline{T0}$)mod 127,

C) le mot délivré par le circuit logique de sortie est un octet dont tous les bits sont pseudo-aléatoires.

De toute façon, les caractéristiques et avantages de l'invention apparaîtront mieux à la lumière de la description qui va suivre. Cette description porte sur des exemples de réalisation donnés à titre explicatif et nullement limitatif et elle se réfère à des dessins annexés sur lesquels :

- la figure 1 représente la structure générale du générateur de l'invention ;
- la figure 2 montre le circuit d'initialisation ;
- les figures 3A et 3B montrent le circuit de calcul ;
- la figure 4 montre le circuit logique de sortie ;
- la figure 5 montre un mode de réalisation d'un additionneur modulo $2^n$-1.

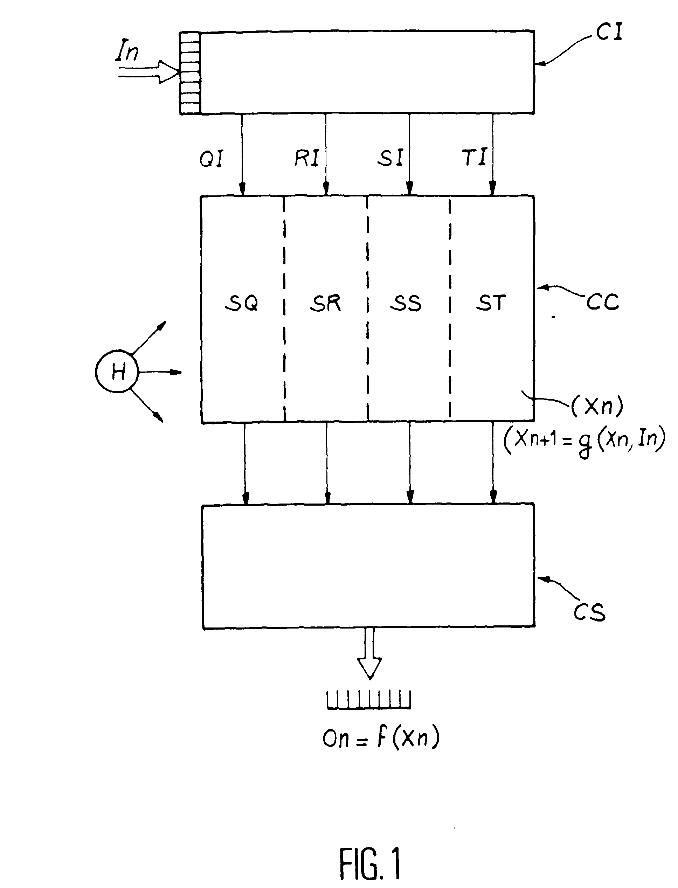

On voit sur la figure 1 un générateur comprenant :

3

- un circuit d'initialisation CI recevant un octet d'initialiation In et délivrant quatre mots d'initialisation QI, RI, SI, TI,
- un circuit de calcul CC composé de quatre sous-ensembles SQ, SR, SS, ST recevant respectivement les quatre mots d'initialisation QI, RI, SI, TI,
- un circuit de logique de sortie CS relié aux quatre sous-ensembles précédents et délivrant un octet On,
- une horloge H délivrant des impulsions dont le rang est noté n.

A l'instant n, l'état du générateur est noté Xn. L'octet de sortie On est une fonction f de cet état soit :

$$On = f(Xn).$$

A l'instant suivant n+1, l'état Xn+1 du générateur est une fonction g de l'état précédent Xn et de l'octet d'initialisation In soit :

$$Xn+1 = g(Xn, In).$$

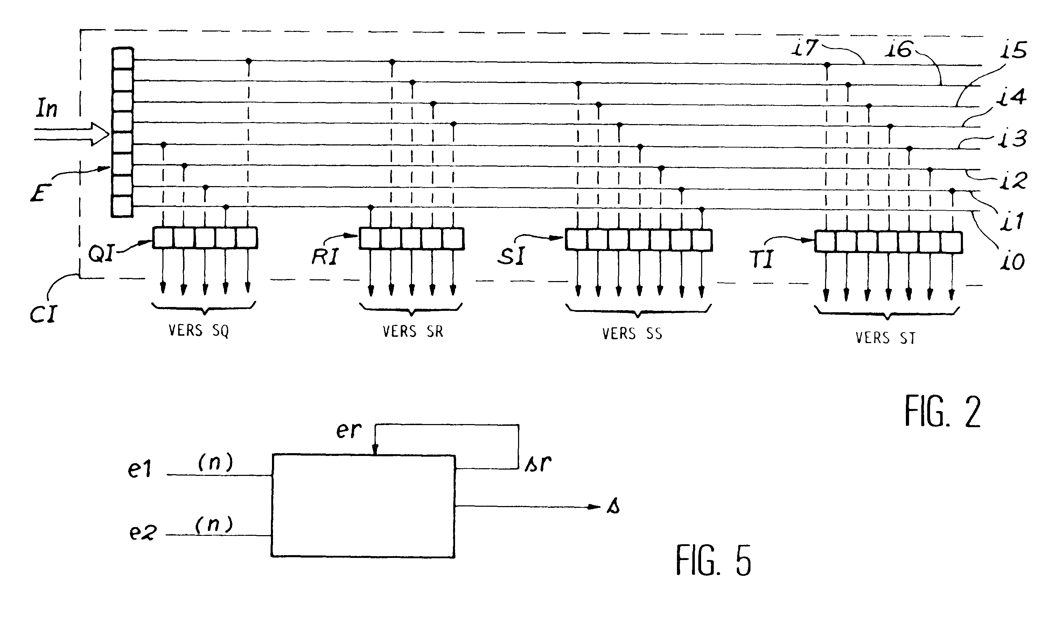

Les figures 2, 3, 4 permettent de préciser la structure des mots d'initialisation appliqués aux quatre sous-ensembles ainsi que les fonctions f et g.

La figure 2, tout d'abord, montre le circuit d'initialisation CI. Tel que représenté, il comprend un registre d'entrée E à 8 cellules recevant l'octet d'initialisation In. Les différents bits de cet octet sont notés, en partant du bit de poids fort :
    i7, i6, i5, i4, i3, i2, i1, i0.
L'octet In est formé selon les caractéristiques du système dans lequel s'insère le générateur. Les documents cités plus haut décrivent des moyens de formation d'octets d'initialisation.

Le circuit CI représenté comprend :

- un registre QI à 5 cellules recevant respectivement les bits i3, i2, i1, i0, i7,
- un registre R1 à 5 cellules recevant respectivement les bits i0, i7, i6, i5, i4,
- un registre SI à 7 cellules recevant respectivement les bits i6, i5, i4, i3, i2, i1, i0,
- un registre TI à 7 cellules recevant respectivement les bits i7, i6, i5, i4, i3, i2, i1.

Dans La pratique, ces registres QI, RI, SI, TI peuvent être fictifs puisqu'il suffit d'effectuer les connexions appropriées à la sortie des celluless du registre d'entrée E pour obtenir les sélections de bits souhaitées. On supposera néanmoins dans la suite que ces registres existent pour faciliter les notations telles que QI, RI, SI, TI qui expriment des mots d'initialisation entrant dans la définition de l'état du système.

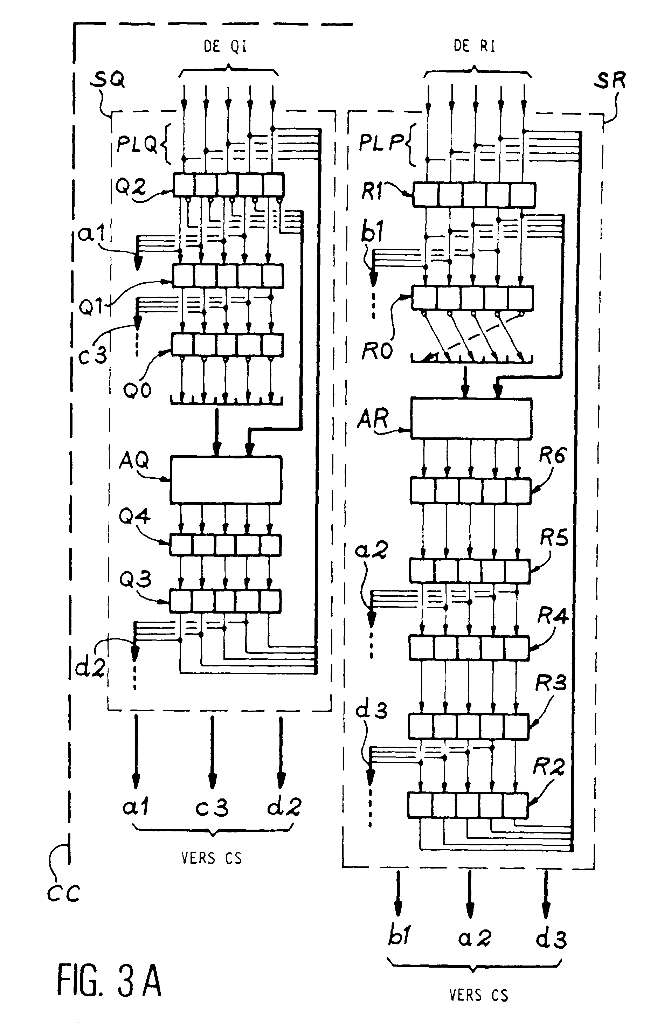

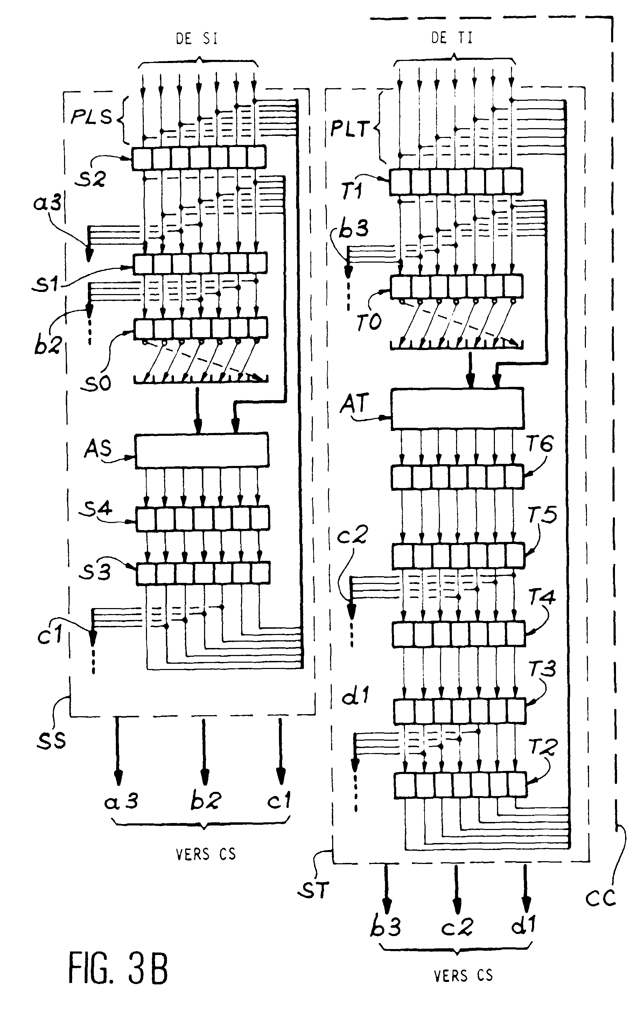

La figure 3 montre la structure et les connexions des différents sous-ensembles SQ, SR, SS et ST constituant le circuit de calcul CC.

Le premier sous-ensemble SQ comprend, outre ses 5 registres de 5 bits Q0, Q1, Q2, Q3, Q4, un additionneur modulo 31 AQ à 2 entrées et une sortie et un jeu de 5 portes logiques OU-exclusif PLQ à deux entrées et une sortie, ces moyens étant interconnectés de la manière suivante :

- le jeu de portes logiques PLQ reçoit sur une entrée le premier mot d'initialisation QI,
- le registre Q3 a sa sortie reliée à une entrée du jeu de portes logiques PLQ,
- le registre Q2 est relié à la sortie du jeu de portes PLQ,
- le registre Q1 est relié au registre Q2,
- le registre Q0 est relié au registre Q1,
- l'additionneur AQ a une entrée reliée au registre Q0 et l'autre entrée au registre Q2,
- le registre Q4 a son entrée reliée à la porte de l'additionneur AQ,

ce premier sous-ensemble ayant 3 sorties, la première a1 reliée au registre Q2, la seconde c3 au registre Q1, la troisième d2 au registre Q3.

Le deuxième sous-ensemble SR comprend, outre ses 7 registres de 5 bits R1, R2, R3, R4, R5, R6, un additionneur modulo 31 AR à deux entrées et une sortie, un jeu PLR de portes logiques OU-exclusif à deux entrées et une sortie, ces moyens étant interconnectés de la manière suivante :

- le jeu de portes logiques PLR reçoit sur l'une de ses entrées le deuxième mot d'initialisation RI,
- le registre R1 est relié à la sortie des 5 portes logiques PLR,
- le registre R0 est relié au registre R1,

- l'additionneur AR a l'une de ses entrée reliée aux sorties du registre R0 après décalage circulaire d'un rang vers les poids faibles et l'autre entrée reliée au registre R1,
- le registre R6 est relié à la sortie de l'additionneur AR,
- le registre R5 est relié au registre R6,
- le registre R4 est relié au registre R5,
- le registre R3 est relié au registre R4,
- le registre R2 est relié au registre R3, la sortie du registre R2 étant reliée à l'autre entrée du jeu de portes logiques PLR,

ce deuxième sous-ensemble ayant une première sortie b1 reliée au registre R1, une deuxième sortie a2 reliée au registre R5, une troisième sortie d3 reliée au registre R3.

Le troisième sous-ensemble SS comprend, outre ses 5 registres de 7 bits S0, S1, S2, S3, S4, un additionneur modulo 127 AS à deux entrées et une sortie, un jeu de 7 portes logiques OU-exclusif PLS à 2 entrées et une sortie, ces moyens étant interconnectés de la manière suivante :

- le jeu PLS de portes logiques PLS reçoit sur l'une de ses entrées le troisième mot d'initialisation SI,
- le registre S2 est relié à la sortie du jeu de portes logiques PLS,
- le registre S1 est relié au registre S2,
- le registre S0 est relié au registre S1,
- le registre S4 est relié à la sortie de l'additionneur AS,
- le registre S3 a son entrée reliée à S4 et sa sortie reliée à l'autre entrée du jeu de portes PLS,
- l'additionneur AS a l'une de ses entrées reliée aux sorties du registre S0 après décalage circulaire de deux rangs vers les poids forts et l'autre au registre S2,

ce troisième sous-ensemble SS ayant une première sortie a3 reliée au registre S2, une deuxième sortie b2 reliée au registre S1 et une troisième sortie c1 reliée au registre S3.

Le quatrième sous-ensemble ST comprend, outre ses 7 registres de 7 bits T0, T1, T2, T3, T4, T5, T6, un additionneur modulo 127 AT à deux entrées et une sortie et un jeu de 7 portes logiques OU-exclusif PLT à 2 entrées et une sortie, ces moyens étant interconnectés de la manière suivante :

- le jeu PLT de portes logiques reçoit sur l'une de ses entrées le quatrième mot d'initialisation TI,
- le registre T1 est relié à la sortie du jeu de portes logiques PLT,
- le registre T0 est relié au registre T1,
- l'additionneur AT a l'une de ses entrées reliée aux sorties du registre T0 après permutation circulaire d'un rang vers les poids forts et l'autre entrée reliée au registre T1,
- le registre T6 est relié à la sortie de l'additionneur AT,
- le registre T5 est relié au registre T6,
- le registre T4 est relié au registre T5,
- le registre T3 est relié au registre T4,
- le registre T2 est relié au registre T3,

ce quatrième sous-ensemble ST ayant une première sortie b3 reliée à la sortie du registre T1, une deuxième sortie c2 reliée au registre T5 et une troisième sortie d1 reliée au registre T3.

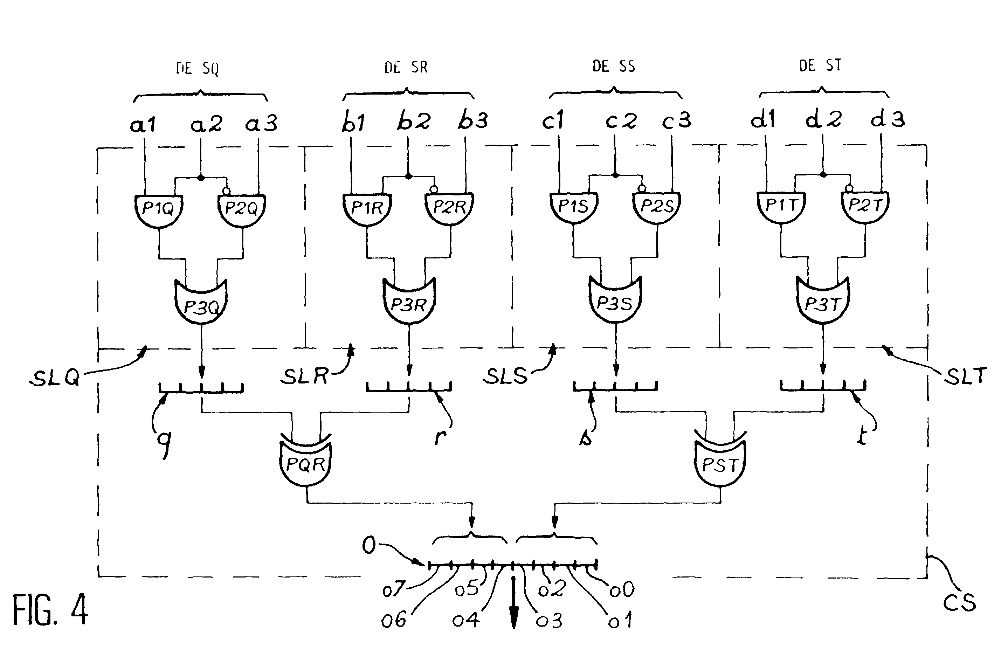

La figure 4 montre la structure du circuit logique de sortie CS.

Tel que représenté, ce circuit comprend :

- un premier sous-ensemble logique SLQ ayant 3 entrées reliées aux 3 sorties a1, a2, a3 des sous-ensembles SQ, SR, SS du circuit de calcul CC et comprenant deux portes ET P1Q, P2Q recevant respectivement a1 et a2 et a2 et a3 et une porte OU P3Q ayant deux entrées reliées aux deux portes ET et une sortie délivrant un premier mot de 4 bits q,
- un second sous-ensemble logique SLR identique au premier SLQ P1R, P2R, P3R et relié aux sorties b1, b2, b3 des sous-ensembles SR, SS, ST du circuit de calcul et délivrant un deuxième mot de 4 bits r,
- un troisième sous-ensemble logique SLS identique au premier SLQ P1S, P2S, P3S et relié aux sorties c1, c2, c3 des sous-ensembles SQ, SS, ST du circuit de calcul et délivrant un troisième mot de 4 bits s,
- un quatrième sous-ensemble logique SLT identique au premier SLQ P1T, P2T, P3T et relié aux sorties d1, d2, d3 des sous-ensembles SQ, SR, ST du circuit de calcul CC et délivrant un quatrième mot de 4 bits t,
- une première porte logique OU-exclusif PQR recevant les deux mots q et r et délivrant un mot de 4 bits constituant les 4 bits de poids fort 0(7), 0(6), 0(5), 0(4) de l'octet On finalement délivré par le générateur,

- une deuxième porte logique OU-exclusif PST recevant les 2 mots s et t et délivrant un mot de 4 bits constituant les 4 bits de poids faible 0(3), 0(2), 0(1), 0(0) de l'octet On finalement délivré par le générateur.

On vérifie aisément que, compte-tenu de la valeur des bits appliqués à l'entrée du circuit, les 8 bits de sortie, soit 0(7), 0(6), 0(5), 0(4), 0(3), 0(2), 0(1), 0(0), sont donnés par les relations logiques suivantes :

$$o(0)=[S3(2).T5(0)+Q1(0).\overline{T5(0)}]\oplus[(T3(2).Q3(1)+R3(1).\overline{Q3(1)}]$$

$$o(1)=[S3(3).T5(1)+Q1(1).\overline{T5(1)}]\oplus[T3(3).Q3(2)+R3(2).\overline{Q3(2)}]$$

$$o(2)=[S3(4).T5(2)+Q1(2).\overline{T5(2)}]\oplus[T3(4).Q3(3)+R3(3).\overline{Q3(3)}]$$

$$o(3)=[S3(5).T5(3)+Q1(3).\overline{T5(3)}]\oplus[T3(5).Q3(4)+R3(4).\overline{Q3(4)}]$$

$$o(4)=[Q2(1).R5(0)+S2(3).\overline{R5(0)}]\oplus[R1(1).S1(0)+T1(3).\overline{S1(0)}]$$

$$o(5)=[Q2(2).R5(1)+S2(4).\overline{R5(1)}]\oplus[R1(2).S1(1)+T1(4).\overline{S1(1)}]$$

$$o(6)=[Q2(3).R5(2)+S2(5).\overline{R5(2)}]\oplus[R1(3).S1(2)+T1(5).\overline{S1(2)}]$$

$$o(7)=[Q2(4).R5(3)+S2(6).\overline{R5(3)}]\oplus[R1(4).S1(3)+T1(6).\overline{S1(3)}].$$

Dans ces relations, et selon des conventions habituelles, le signe $\oplus$ représente l'opération OU-exclusif, le signe + l'opération OU, le point l'opération ET et la barre horizontale le complément logique.

Dans le mode de réalisation illustré sur la figure 3, les sous-ensembles SQ, SR, SS, ST contiennent des additionneurs, respectivement modulo 31 et modulo 127, c'est-à-dire, de manière générale modulo $2^n$-1 avec n égal soit à 5 soit à 7. Un additionneur modulo $2^n$-1 peut être obtenu selon l'invention et conformément à la figure 5, par un additionneur à n bits dont la sortie de retenue sr est rebouclée sur l'entrée de retenue er. Les deux entrées e1, e2 reçoivent des mots de n bits (c'est-à-dire à 5 ou 7 bits) et la sortie s délivre la somme modulo $2^n$-1.

## Revendications

1. Générateur pseudo-aléatoire comprenant :

   - un circuit d'initialisation (CI) apte à recevoir un octet d'initialisation (In) et à délivrer différents mots d'initialisation constitués par différentes sélections des bits formant l'octet d'initialisation (In),
   - un circuit de calcul (CC) formé de différents sous-ensembles constitués chacun par des registres à entrées-sorties parallèles, un additionneur et des portes logiques OU-exclusif, interconnectés en cascade formant un rebouclage pour définir une suite récurrente fondée sur un polynome générateur irréductible prédéfini, chaque sous-ensemble ayant une entrée recevant l'un des mots d'initialisation et des sorties délivrant certains bits de certains registres du sous-ensemble,
   - un circuit logique de sortie (CS) possédant des entrées reliées aux sorties des différents sous-ensembles et comprenant des portes logiques aptes à effectuer des opérations logiques sur les bits provenant des différents sous-ensembles , ce circuit de sortie délivrant une suite pseudo-aléatoire de mots,
   - une horloge (H) délivrant des impulsions (n) commandant les différents registres,

   ce générateur étant caractérisé par le fait que :

   A) le circuit d'initialisation (CI) délivre 4 mots d'initialisation, le premier (QI) de 5 bits, le deuxième (RI) de 5 bits, le troisième (SI) de 7 bits, le quatrième (TI) de 7 bits,

B) le circuit de calcul comprend :

- un premier sous-ensemble (SQ) comprenant 5 registres de 5 bits, soit Qo, Q1, Q2, Q3, Q4, ce premier sous-ensemble recevant le premier mot d'initialisation (QI) et correspondant à un polynome générateur (Q) égal à $X^5=15X^2+30$ sur un corps de GALOIS de module 31,
- un deuxième sous-ensemble (SR) comprenant 7 registres de 5 bits, soit Ro, R1, R2, R3, R4, R5, R6, ce deuxième sous-ensemble recevant le deuxième mot d'initialisation (RI) et correspondant à un polynome générateur (R) égal à $X^7=X+15$ sur un corps de GALOIS de module 31,
- un troisième sous-ensemble (SI) comprenant 5 registres de 7 bits, soit So, S1, S2, S3, S4, ce troisième sous-ensemble recevant le troisième mot d'initialisation (SI) et correspondant à un polynome générateur (R) égal à $X^5=2X^2+125$ sur un corps de GALOIS de module 127,
- un quatrième sous-ensemble (ST) comprenant 7 registres de 7 bits, soit To, T1, T2, T3, T4, T5, T6, ce quatrième sous-ensemble recevant le quatrième mot d'initialisation (TI) et correspondant à un polynome générateur (T) égal à $X^7=2X+125$,

l'état Xn du générateur à un instant défini par une impulsion d'horloge n étant défini par le contenu de tous les registres à savoir respectivement :

- 1er sous-ensemble (SQ) : Q0, Q1, Q2, Q3, Q4
- 2ème sous-ensemble (SR) : R0, R1, R2, R3, R4, R5, R6
- 3ème sous ensemble (SS) : S0, S1, S2, S3, S4
- 4ème sous ensemble (ST) : T0, T1, T2, T3, T4, T5, T6

les moyens composant ces 4 sous-ensembles étant par ailleurs interconnectés de telle sorte que l'état Xn+1 du générateur à l'instant n+1 devienne :

1er sous-ensemble (SQ) :
Q1, Q2, Q3 $\oplus$ QI, Q4, (16 Q2 + $\overline{Q0}$)mod 31,
2ème sous-ensemble (SR) :
R1, R2 $\oplus$ RI, R3, R4, R5, R6, (R1 + 16 $\overline{R0}$)mod 31,
3ème sous-ensemble (SS) :
S1, S2, S3 $\oplus$ SI, S4, ((2 S2 + 2 $\overline{S0}$)mod 127),
4ème sous-ensemble (ST) :
T1, T2 $\oplus$ TI, T3, T4, T5, T6, (2 T1 + 2 $\overline{T0}$)mod 127,

C) le mot délivré par le circuit logique de sortie (CS) est un octet (On) dont tous les bits sont pseudo aléatoires.

2. Générateur selon la revendication 1, caractérisé par le fait que le circuit d'initialisation (CI) recevant un octet d'initialisation (In) dont les 8 bits sont notés i7, i5, i4, i3, i2, i1, i0 :

- le premier mot d'initialisation (QI) comprend les 5 bits i3, i2, i1, i0, i7,
- le deuxième mot d'initialisation (RI) comprend les 5 bits i0, i7, i6, i5, i4,
- le troisième mot d'initialisation (SI) comprend les 7 bits i6, i5, i4, i3, i2, i1, i0,
- le quatrième mot d'initialisation (TI) comprend les 7 bits i7, i6, i5, i4, i3, i2, i1.

3. Générateur selon la revendication 2, caractérisé par le fait que :

a) le premier sous-ensemble SQ du circuit de calcul (CC) omprend, outre ses 5 registres Q0, Q1, Q2, Q3, Q4 de 5 bits chacun, un additionneur modulo 31 nommé AQ à 2 entrées et une sortie et un jeu de 5 portes logiques OU-exclusif PLQ à deux entrées et une sortie, ces moyens étant interconnectés de la manière suivante :

- le jeu de portes logiques PLQ reçoit sur une entrée le premier mot d'initialisation (QI),
- le registre Q3 a son entrée reliée au registre Q4 et sa sortie reliée à l'autre entrée du jeu de portes logiques PLQ,
- le registre Q2 est relié au jeu de portes logiques PLQ,
- le registre Q1 est relié au registre Q2,

- le registre Q0 est relié au registre Q1,
- l'additionneur AQ a une entrée reliée au registre Q0 et l'autre entrée au registre Q2,
- le registre Q4 a son entrée reliée à la porte de l'additionneur AQ,

ce premier sous-ensemble SQ ayant 3 sorties, la première a1 reliée au registre Q2, la seconde c3 au registre Q1, la troisième d2 au registre Q3,

b) le deuxième sous-ensemble SR du circuit de calcul comprend, outre ses 7 registres R1,R2,R3,R4,R5,R6, de 5 bits chacun, un additionneur modulo 31 nommé AR à deux entrées et une sortie, un jeu PLR de portes Logiques OU-exclusif à deux entrées et une sortie, ces moyens étant interconnectés de la manière suivante :

- le jeu de portes logiques PLP reçoit sur l'une de ses entrées le deuxièmme mot d'initialisation (RI),
- le registre R1 est relié à la sortie des 5 portes logiques PLR,
- le registre R0 est relié au registre R1,
- l'additionneur AR a l'une de ses entrée reliée aux sorties du registre R0 après décalage circulaire d'un rang vers les poids faibles et l'autre entrée reliée au registre R1,
- le registre R6 est relié à la sortie de l'additionneur AR,
- le registre R5 est relié au registre R6,
- le registre R4 est relié au registre R5,
- le registre R3 est relié au registre R4,
- le registre R2 est relié au registre R3, la sortie du registre R2 étant reliée à l'autre entrée du jeu de portes logiques PLP,

ce deuxième sous-ensemble SR ayant une première sortie b1 reliée au registre R1, une deuxième sortie a2 reliée au registre R6, une troisième sortie d3 reliée au registre R4,

c) le troisième sous-ensemble SS du circuit de calcul (CC) comprend, outre ses 5 registres S0, S1, S2, S3, S4 de 7 bits chacun, un additionneur modulo 127 nommé AS à deux entrées et une sortie, un jeu de 7 portes logiques OU-exclusif PLS à 2 entrées et une sortie, ces moyens étant interconnectés de la manière suivante :

- le jeu PLS de portes logiques PLS reçoit sur l'une de ses entrées le troisième mot d'initialisation (SI),
- le registre S2 est relié à la sortie du jeu de portes logiques PLS,
- le registre S3 a son entrée reliée au registre S4 et sa sortie à l'autre entrée du jeu de portes logiques PLS,
- le registre S1 est relié au registre S2,
- le registre S0 est relié au registre S1,
- l'additionneur AS a l'une de ses entrées reliée aux sorties du registre S0 après décalage cirulaire de deux rangs vers les poids forts et l'autre au registre S2,

ce troisième sous-ensemble SS ayant une première sortie a3 reliée au registre S2, une deuxième sortie b2 reliée au registre S1 et une troisième sortie c1 reliée au registre S3,

d) le quatrième sous-ensemble ST du circuit de calcul comprend, outre ses 7 registres T0, T1, T2, T3, T4, T5, T6 de 7 bits chacun, un additionneur modulo 127 nommé AT à deux entrées et une sortie et un jeu de 7 portes logiques OU-exclusif PLT à 2 entrées et une sortie, ces moyens étant interconnectés de la manière suivante :

- le jeu PLT de portes logiques reçoit sur l'une de ses entrées le quatrième mot d'initialisation (TI),
- le registre T1 est relié à la sortie du jeu de portes logiques PLT,
- le registre T0 est relié au registre T1,
- l'additionneur AT a l'une de ses entrées reliée aux sorties du registre T0 après permutation circulaire d'un rang vers les poids forts et l'autre entrée reliée au registre T1,
- le registre T6 est relié à la sortie de l'additionneur AT,
- le registre T5 est relié au registre T6,
- le registre T4 est relié au registre T5,
- le registre T3 est relié au registre T4,
- le registre T2 a son entrée reliée au registre T3 et sa sortie à l'autre entrée du jeu de portes logiques PLT,

ce quatrième sous-ensemble ST ayant une première sortie b3 reliée à la sortie du registre T1 une deuxième sortie c2 reliée au registre T6 et une troisième sortie d1 reliée au registre T3.

4. Générateur selon la revendication 1, caractérisé par le fait que l'octet (On) délivré par le circuit logique de sortie étant noté 0(7), 0(6), 0(5), 0(4), 0(3), 0(2), 0(2), 0(1), 0(0), ce circuit logique (CS) est pourvu de moyens aptes à former ces bits par les combinaisons logiques suivantes où le chiffre entre parenthèses indique le rang du bit prélevé dans le registre correspondant :

$$o(0)=[S3(2).T5(0)+Q1(0).\overline{T5(0)}] \oplus [T3(2).Q3(1)+R3(1).\overline{Q3(1)}]$$

$$o(1)=[S3(3).T5(1)+Q1(1).\overline{T5(1)}] \oplus [T3(3).Q3(2)+R3(2).\overline{Q3(2)}]$$

$$o(2)=[S3(4).T5(2)+Q1(2).\overline{T5(2)}] \oplus [T3(4).Q3(3)+R3(3).\overline{Q3(3)}]$$

$$o(3)=[S3(5).T5(3)+Q1(3).\overline{T5(3)}] \oplus [T3(5).Q3(4)+R3(4).\overline{Q3(4)}]$$

$$o(4)=[Q2(1).R5(0)+S2(3).\overline{R5(0)}] \oplus [R1(1).S1(0)+T1(3).\overline{S1(0)}]$$

$$o(5)=[Q2(2).R5(1)+S2(4).\overline{R5(1)}] \oplus [R1(2).S1(1)+T1(4).\overline{S1(1)}]$$

$$o(6)=[Q2(3).R5(2)+S2(5).\overline{R5(2)}] \oplus [R1(3).S1(2)+T1(5).\overline{S1(2)}]$$

$$o(7)=[Q2(4).R5(3)+S2(6).\overline{R5(3)}] \oplus [R1(4).S1(3)+T1(6).\overline{S1(3)}].$$

5. Générateur selon la revendication 4, caractérisé par le fait que le circuit de sortie (CS) comprend :

- un premier sous-ensemble logique (SLQ) ayant 3 entrées reliées aux 3 sorties a1, b1, c1 des sous-ensembles SQ, SR, SS du circuit de calcul (CC) et comprenant deux portes ET (P1Q, P2Q) recevant respectivement a1 et a2 et a2 et a3 et une porte OU (P3Q) ayant deux entrées reliées aux deux portes ET et une sortie délivrant un premier mot q de 4 bits q,
- un second sous-ensemble logique (SLR) identique au premier (SLQ) (P1R, P2R, P3R) et relié aux sorties b1, b2, b3 des sous-ensembles SR, SS, ST du circuit de calcul et délivrant un deuxième mot r de 4 bits, - un troisième sous-ensemble logique (SLS) identique au premier (SLQ) (P1S, P2S, P3S) et relié aux sorties c1, c2, c3 des sous-ensembles SQ, SS, ST du circuit de calcul et délivrant un troisième mot s de 4 bits,
- un quatrième sous-ensemble logique (SLT) identique au premier (SLQ) (P1T, P2T, P3T) et relié aux sorties d1, d2, d3 des sous-ensembles SQ, SR, ST du circuit de calcul (CC) et délivrant un quatrième mot t de 4 bits,
- une première porte logique OU-exclusif (PQR) recevant les deux mots q et r et délivrant un mot de 4 bits constituant les 4 bits de poids fort (0(7), 0(6), 0(5), 0(4)) de l'octet On finalement délivré par le générateur,
- une deuxième porte logique OU-exclusif (PST) recevant les 2 mots s et t et délivrant un mot de 4 bits constituant les 4 bits de poids faible (0(3), 0(2), 0(1), 0(0)) de l'octet On finalement délivré par le générateur.

6. Générateur selon la revendication 3, caractérisé par le fait que les additionneurs modulo 31 nommés AQ et AR, respectivement les additionneurs modulo 127 nommé AS, AT, sont constitués chacun d'un additionneur à 5 bits, respectivement 7 bits, avec une sortie de retenue et une entrée de retenue, ladite sortie étant rebouclée sur ladite entrée.

**Patentansprüche**

1. Pseudo-Zufallsgenerator, umfassend:

- eine Initialisierungsschaltung (CI), fähig ein Initialisierungs-Byte (In) zu empfangen und verschiedene Initialisierungswörter zu liefern, gebildet durch unterschiedliche Selektionen der das Initialisierungs-Byte bildenden Bits,
- eine Rechenschaltung (CC), gebildet durch verschiedene Untergruppen, jede gebildet durch Register mit parallelen Eingängen-Ausgängen, einen Addierer und logische Exklusiv-ODER-Glieder, kaskadenartig zusammengeschaltet, eine Rückschleifung bildend, um eine rückläufige Folge zu definieren, begründet auf einem festgelegten irreduziblen erzeugenden Polynom, wobei jede Untergruppe einen Eingang hat, der eines der Initialisierungswörter empfängt, und Ausgänge, die bestimmte Bits von bestimmten Registern der Untergruppe liefern,

- eine logische Ausgangsschaltung (CS) mit Eingängen, die mit den Ausgängen der verschiedenen Untergruppen verbunden sind und logische Glieder umfassen, die fähig sind, an den von den verschiedenen Untergruppen stammenden Bits logischen Operationen vorzunehmen, wobei diese Ausgangsschaltung eine pseudozufällige Folge von Wörtern liefert,

- einen Taktgeber (H), der die verschiedenen Register steuernde Impulse (n) liefert,

wobei dieser Generator **dadurch gekennzeichnet** ist:

A) daß die Initialisierungsschaltung (CI) 4 Initialisierungswörter liefert, das erste (QI) mit 5 Bits, das zweite (RI) mit 5 Bits, das dritte (SI) mit 7 Bits, das vierte (TI) mit 7 Bits,

B) daß die Rechenschaltung umfaßt:

- eine erste Untergruppe (SQ), 5 Registern mit 5 Bits enthaltend, nämlich Q0, Q1, Q2, Q3, Q4, wobei diese erste Untergruppe das erste Initialisierungswort (QI) empfängt und einem erzeugenden Polynom (Q) gleich $X^5=15X^2+30$ auf einem GALOIS-Körper des Moduls 31 entspricht,
- eine zweite Untergruppe (SR), 7 Register mit 5 Bits enthaltend, nämlich R0, R1, R2, R3, R4, R5, R6, wobei diese zweite Untergruppe das zweite Initialisierungswort (RI) empfängt und einem erzeugenden Polynom (R) gleich $X^7=X+15$ auf einem GALOIS-Körper des Moduls 31 entspricht,
- eine dritte Untergruppe (SI), 5 Register mit 7 Bits enthaltend, nämlich S0, S1, S2, S3, S4, wobei diese dritte Untergruppe das dritte Initialisierungswort (SI) empfängt und einem erzeugenden Polynom (R) gleich $X^5=2X^2+125$ auf einem GALOIS-Körper des Moduls 127 entspricht,
- eine vierte Untergruppe (ST), 7 Register mit 7 Bits enthaltend, nämlich T0, T1, T2, T3, T4, T5, T6, wobei diese vierte Untergruppe das vierte Initialisierungswort (TI) empfängt und einem erzeugenden Polynom (T) gleich $X^7=2X+125$ entspricht,

wobei der Zustand Xn des Generators zu einem durch einen Taktimpuls n definierten Zeitpunkt durch den Inhalt aller Register definiert wird, jeweils nämlich:

- 1.Untergruppe (SQ): Q0, Q1, Q2, Q3, Q4
- 2.Untergruppe (SR): R0, R1, R2, R3, R4, R5, R6
- 3.Untergruppe (SS): S1, S2, S3, S4
- 4.Untergruppe (ST): T0, T1, T2, T3, T4, T5, T6

wobei die diese 4 Untergruppen bildenden Einrichtungen außerdem derart zusammengeschaltet sind, daß der Zustand Xn+1 des Generators sich zum Zeitpunkt n+1 folgendermaßen darstellt:

1.Untergruppe (SQ):
Q1, Q2, Q3 ⊕ QI, Q4, $(16\,Q2 + \overline{Q0})\bmod 31$,
2.Untergruppe (SR):
R1, R2 ⊕ RI, R3, R4, R5, R6, $(R1 + 16\overline{\overline{R0}})\bmod 31$,
3.Untergruppe (SS) :
S1, S2, S3 ⊕ SI, S4, $((2\,S2 + 2\,\overline{S0})\bmod 127)$,
4.Untergruppe (ST):
T1, T2 ⊕ TI, T3, T4, T5, T6, $(2\,T1 + 2\,\overline{T0})\bmod 127$,

C) daß das durch die logische Ausgangsschaltung (CS) gelieferte Wort ein Byte (On) ist, dessen Bits alle pseudo-zufällig sind.

2. Generator nach Anspruch 1, dadurch gekennzeichnet, daß die Initialisierungsschaltung (CI) ein Initialisierungsbyte (In) empfängt, dessen 8 Bits mit i7, i5, i4, i3, i2, i1, i0 bezeichnet werden, wobei:

- das erste Initialisierungswort (QI) die 5 Bits i3, i2, i1, i0, i7 umfaßt,

- das zweite Initialisierungswort (RI) die Bits i0, i7, i6, i5, i4 umfaßt,
- das dritte Initialisierungwort (SI) die 7 Bits i6, i5, i4, i3, i2, i1, i0 umfaßt,
- das vierte Initialisierungswort (TI) die 7 Bits i7, i6, i5, i4, i3, i2, i1 umfaßt.

3.  Generator nach Anspruch 2, dadurch gekennzeichnet:

    a) daß die erste Untergruppe SQ der Rechenschaltung (CC) außer ihren 5 Registern Q0, Q1, Q2, Q3, Q4, jedes mit 5 Bits, einen mit AQ bezeichneten Addierer modulo 31 mit 2 Eingängen und einem Ausgang umfaßt und eine Gruppe von 5 Exklusiv-ODER-Gliedern PLQ mit zwei Eingängen und einem Ausgang, wobei diese Einrichtungen folgendermaßen zusammengeschaltet sind:

    - die Logikgliedergruppe PLQ empfängt auf einem Eingang das erste Initialisierungswort (QI),
    - das Register Q3 ist mit seinem Eingang mit dem Register Q4 verbunden und mit seinem Ausgang mit dem anderen Eingang der Logikgliedergruppe PLQ,
    - das Register Q2 ist mit der Logikgliedergruppe PLQ verbunden,
    - das Register Q1 ist mit dem Register Q2 verbunden,
    - das Register Q0 ist mit dem Register Q1 verbunden,
    - der Addierer AQ ist mit einem Eingang mit dem Register Q0 verbunden und mit dem anderen Eingang mit dem Register Q2,
    - das Register Q4 ist mit seinem Eingang mit dem Addierglied AQ verbunden,

    wobei diese erste Untergruppe SQ 3 Ausgänge hat, wovon der erste al mit dem Register Q2 verbunden ist, der zweite c3 mit dem Register Q1 und der dritte d2 mit dem Register Q3,

    b) daß die zweite Untergruppe SR der Rechenschaltung außer ihren 7 Registern R1, R2, R3, R4, R5, R6, jedes mit 5 Bits, einen mit AR bezeichneten Addierer modulo 31 mit zwei Eingängen und einem Ausgang umfaßt und eine Gruppe PLR Exklusiv-ODER-Logikglieder mit zwei Eingängen und einem Ausgang, wobei diese Einrichtungen folgendermaßen zusammengeschaltet sind:

    - die Logikgliedergruppe PLP empfängt auf einem ihrer Eingänge das zweite Initialisierungswort (RI),
    - das Register R1 ist mit dem Ausgang der 5 Logikglieder PLR verbunden,
    - das Register R0 ist mit dem Register R1 verbunden,
    - der Addierer AR ist mit einem seiner Eingänge mit den Ausgängen des Registers R0 verbunden, nach zyklischer Verschiebung um eine Stelle in Richtung der niedrigen Wertigkeiten, und mit dem anderen Eingang mit dem Register R1,
    - das Register R6 ist mit dem Ausgang des Addierers AR verbunden,
    - das Register R5 ist mit dem Register R6 verbunden,
    - das Register R4 ist mit dem Register R5 verbunden,
    - das Register R3 ist mit dem Register R4 verbunden,
    - das Register R2 ist mit dem Register R3 verbunden, wobei der Ausgang des Registers R2 mit dem anderen Eingang der Logikgliedergruppe PLP verbunden ist,

    wobei diese zweite Untergruppe SR mit einem ersten Ausgang b1 mit dem Register R1 verbunden ist, mit einem zweiten Ausgang a2 mit dem Register R6 verbunden ist und mit einem dritten Ausgang d3 mit dem Register R4 verbunden ist,

    c) daß die dritte Untergruppe SS der Rechenschaltung CC außer ihren 5 Registern S0, S1, S2, S3, S4, jedes mit 7 Bits, einen mit AS bezeichneten Addierer modulo 127 mit zwei Eingängen und einem Ausgang umfaßt und eine Gruppe mit 7 Exklusiv-ODER-Logikglieder PLS mit zwei Eingängen und einem Ausgang, wobei diese Einrichtungen folgendermaßen zusammengeschaltet sind:

    - die Logikgliedergruppe PLS empfängt auf einem ihrer Eingänge das dritte Initialisierungswort (SI),
    - das Register S2 ist mit dem Ausgang der Logikgliedergruppe PLS verbunden,
    - das Register S3 ist mit seinem Eingang mit dem Register S4 verbunden und mit seinem Ausgang mit dem anderen Eingang der Logikgliedergruppe PLS,
    - das Register S1 ist mit dem Register S2 verbunden,
    - das Register S0 ist mit dem Register S1 verbunden,
    - der Addierer AS ist mit einem seiner Eingänge mit dem Ausgang des Registers S0 verbunden, nach zyklischer Verschiebung um eine Stelle in Richtung der hohen Wertigkeiten, und der andere Eingang ist mit dem Register T1 verbunden,

- das Register T6 ist mit dem Ausgang des Addierers AT verbunden,
- das Register T5 ist mit dem Register T6 verbunden,
- das Register T4 ist mit dem Register T5 verbunden,
- das Register T3 ist mit dem Register T4 verbunden,
- das Register T2 ist mit seinem Eingang mit dem Register T3 verbunden und mit seinem Ausgang mit dem anderen Eingang der Logikgliedergruppe PLT,

wobei diese vierte Untergruppe einen ersten Ausgang b3 hat, verbunden mit dem Ausgang des Registers T1, einen zweiten Ausgang c2, verbunden mit dem Register T6, und einen dritten Ausgang d1, verbunden mit dem Register T3.

4. Generator nach Anspruch 1, dadurch gekennzeichnet, daß das durch die logische Ausgangsschaltung gelieferte Byte (On) mit 0(7) , 0(6) , 0(5), 0(4), 0(3), 0(2), 0(1), 0(0) bezeichnet wird, wobei diese logische Schaltung (CS) mit Einrichtungen versehen ist, die diese Bits durch die folgenden logischen Kombinationen formen können, wo die Ziffern zwischen Klammern die Stelle des geholten bzw. abgegriffenen Bits in dem entsprechenden Register angeben:

$$o(0)=[S3(2).T5(0)+Q1(0).\overline{T5(0)}] \oplus [T3(2).Q3(1)+R3(1).\overline{Q3(1)}]$$

$$o(1)=[S3(3).T5(1)+Q1(1).\overline{T5(1)}] \oplus [T3(3).Q3(2)+R3(2).\overline{Q3(2)}]$$

$$o(2)=[S3(4).T5(2)+Q1(2).\overline{T5(2)}] \oplus [T3(4).Q3(3)+R3(3).\overline{Q3(3)}]$$

$$o(3)=[S3(5).T5(3)+Q1(3).\overline{T5(3)}] \oplus [T3(5).Q3(4)+R3(4).\overline{Q3(4)}]$$

$$o(4)=[Q2(1).R5(0)+S2(3).\overline{R5(0)}] \oplus [R1(1).S1(0)+T1(3).\overline{S1(0)}]$$

$$o(5)=[Q2(2).R5(1)+S2(4).\overline{R5(1)}] \oplus [R1(2).S1(1)+T1(4).\overline{S1(1)}]$$

$$o(6)=[Q2(3).R5(2)+S2(5).\overline{R5(2)}] \oplus [R1(3).S1(2)+T1(5).\overline{S1(2)}]$$

$$o(7)=[Q2(4).R5(3)+S2(6).\overline{R5(3)}] \oplus [R1(4).S1(3)+T1(6).\overline{S1(3)}].$$

5. Generator nach Anspruch 4, dadurch gekennzeichnet, daß die Ausgangsschaltung (CS) umfaßt:

- eine erste Logik-Untergruppe (SLQ) mit 3 Eingängen, verbunden mit den drei Ausgängen a1, b1, c1 der Untergruppen SQ, SR, SS der Rechenschaltung (CC) und zwei UND-Glieder (P1Q, P2Q) umfassend, die jeweils a1 und a2 und a2 und a3 aufnehmen, und ein ODER-Glied (P3Q) mit zwei Eingängen, verbunden mit den beiden UND-Gliedern und mit einem Ausgang, der ein erstes Wort q mit 4 Bits liefert,
- eine zweite Logik-Untergruppe (SLR), identisch mit der ersten (SLQ) (P1R, P2R, P3R) und verbunden mit den Ausgängen b1, b2, b3 der Untergruppen SR, SS, ST der Rechenschaltung, die ein zweites Wort r mit 4 Bits liefert,
- eine dritte Logik-Untergruppe (SLS), identisch mit der ersten (SLQ) (P1S, P2S, P3S) und verbunden mit den Ausgängen c1, c2, c3 der Untergruppen SQ, SS, ST der Rechenschaltung, die ein drittes Wort s mit 4 Bits liefert,
- eine vierte Logik-Untergruppe (SLT), identisch mit der ersten (SLQ) (P1T, P2T, P3T) und verbunden mit den Ausgängen d1, d2, d3 der Untergruppen SQ, SR, ST der Rechenschaltung (CC), die ein viertes Wort t mit 4 Bits liefert,
- ein erstes Exklusiv-ODER-Logikglied (PQR), das die beiden Wörter q und r empfängt und ein Wort mit 4 Bits liefert, die die 4 Bits hoher Wertigkeit (0(7), 0(6), 0(5), 0(4)) des schließlich durch den Generator gelieferten Bytes On bilden,

- ein zweites Exklusiv-ODER-Logikglied (PST), das die beiden Wörter s und t empfängt und ein Wort mit 4 Bits liefert, die die 4 Bits niedriger Wertigkeit (0(3), 0(2), 0(1), 0(0)) des schließlich durch den Generator gelieferten Bytes On bilden.

**6.** Generator nach Anspruch 3, dadurch gekennzeichnet, daß die mit AQ und AR bezeichneten Addierer modulo 31 beziehungsweise die mit AS und AT bezeichneten Addierer modulo 127 jeweils gebildet werden durch 5-Bit- beziehungsweise 7-Bit-Addierer, mit einem übertrag-Ausgang und einem Übertrag-Eingang, wobei besagter Ausgang zurückgeschleift ist auf besagten Eingang.

## Claims

**1.** Pseudorandom generator including:

- an initialization circuit (CI) able to receive on initialization byte and deliver various initialization words constituted by various selections of bits forming the initialization byte (In),
- a calculation circuit (CC) formed of various sub-units each constituted by registers with parallel inputs/outputs, an adder and exclusive-OR logic gates interconnected in cascade forming a relooping for defining a recurrent sequence based on a predefined, irreducible generator polynomial, each sub-unit having one input receiving one of the initialization words and outputs delivering certain bits from certain registers of the sub-unit,
- a logic output circuit (CS) having inputs connected to the outputs of the various sub-units and including logic gates able to carry out logic operations on the bits originating from the various sub-units, this output circuit delivering a pseudorandom sequence of words,
- a clock (H) delivering pulses (n) controlling the various registers, this generator being characterized by the fact that:

A) the initialization circuit (CI) delivers 4 initialization words, the first (QI) with 5 bits, the second (RI) with 5 bits, the third (SI) with 7 bits and the fourth (TI) with 7 bits,
B) the calculation circuit includes:

- one first sub-unit (SQ) including 5 registers of 5 bits, namely Qo, Q1, Q2, Q3, Q4, this first sub-unit receiving the first initialization word (QI) and corresponding to a generator polynomial equal to $X^5 = 15X^2 + 30$ on a GALOIS field of module 31,
- a second sub-unit (SR) including 7 registers of 5 bits, namely Ro, R1, R2, R3, R4, R5, R6, this second sub-unit receiving the second initialization word (RI) and corresponding to a generator polynomial (R) equal to $X^7 = X+15$ on a GALOIS field of module 31,
- one third sub-unit (SI) including 5 registers of 7 bits, namely So, S1, S2, S3, S4, this third sub-unit receiving the third initialization word (SI) and corresponding to a generator polynomial (R) equal to $X^5 = 2X^2 +125$ on a GALOIS field of module 127,
- one fourth sub-unit (ST) including 7 registers of 7 bits, namely To, T1, T2, T3, T4, T5, T6, this fourth sub-unit receiving the fourth initialization word (TI) and corresponding to a generator polynomial (T) equal to $X^7 = 2X +125$, the state Xn of the generator at an instant defined by a clock pulse n being defined by the contents of all the registers, namely respectively:

  - 1st sub-unit (SQ) : Q0, Q1, Q2, Q3, Q4
  - 2nd sub-unit (SR) : R0, R1, R2, R3, R4, R5, R6
  - 3rd sub-unit (SS) : S0, S1, S2, S3, S4
  - 4th sub-unit (ST) : T0, T1, T2, T3, T4, T5, T6,

the means comprising these 4 sub-units being moreover interconnected so that the state Xn+1 of the generator at the instant n+1 becomes:

1st sub-unit (SQ):
Q1, Q2, Q3 ⊕ Q1, Q4, (16 Q2 + $\overline{Q0}$)mod 31,
2nd sub-unit (SR):
R1, R2 ⊕ RI, R3, R4, R5, R6 (R1 +16 $\overline{R0}$)mod 31,
3rd sub-unit (SS):

S1, S2, S3 ⊕ SI, S4 ((2 S2 + $\overline{S0}$]mod 127),
4th sub-unit (ST):
T1, T2 ⊕ TI, T3, T4, T5, T6 (2 T1 + $\overline{T0}$)mod 127,

C) the word delivered by the output logic circuit (CS) is one byte (On), whereof all the bits are pseudorandom.

2. Generator according to claim 1, characterized in that the initialization circuit (CI) receiving one initialization byte (In) whose 8 bits are noted i7, i5, i4, i3, i2, i1, i0 :

-   the first initialization word (QI) includes the 5 bits i3, i2, i1, i0, i7,
-   the second initialization word (RI) includes the 5 bits i3, i2, i1, i0, i7,
-   the third initialization word (SI) includes the 7 bits i6, i5, i4, i3, i2, i1, i0,
-   the fourth initialization word (TI) includes the 7 bits i7, i6, i5, i4, i3, i2, i1.

3. Generator according to claim 2, characterized in that:

a) the first sub-unit SQ of the calculation circuit (CC) includes, apart from its registers Q0, Q1, Q2, Q3, Q4 of 5 bits, in each case an adder, modulo 31 AQ with 2 inputs and one output and a set of 5 exclusive-OR logic gates PLQ with two inputs and one output, these means being interconnected as follows:

-   the set of logic gates PLQ receives on one input the first initialization word QI,
-   the register Q3 has its input connected to the regiser Q4 and its output connected to the other input of the set of logic gates PLQ,
-   the register Q2 is connected to the set of logic gates PLQ,
-   the register Q1 is connected to the register Q2,
-   the register Q0 is connected to the register Q1,
-   the adder has one input connected to the register Q0 and the other input to the register Q2,
-   the register Q4 has its input connected to the gate of the adder AQ, this first sub-unit SQ having 3 outputs, the first a1 connected to the register Q2, the second c3 to the register Q1, the third d2 to the register Q3,

b) the second sub-unit SR of the calculation circuit includes, apart from its 7 registers R1, R2, R3, R4, R5, R of 5 bits, in each case an adder, modulo 31 AR, with two inputs and one output, and a set PLR of exclusive-OR logic gates with two inputs and one output, these means being interconnected as follows:

-   the set of logic gates PLP receives on one of its inputs the second initialization word RI,
-   the register RI is connected to the output of the 5 logic gates PLR,
-   the register R0 is connected to the register R1,
-   the adder AR has one of its inputs connected to the outputs of the register R0 after the circular shift of one row towards the least significant bits ad the other input connected to the register R1,
-   the register R6 is connected to the output of the adder AR,
-   the register R5 is connected to the register R6,
-   the register R4 is connected to the register R5,
-   the register R3 is connected to the register R4,
-   the register R2 is connected to the register R3, the output of the register R2 being connected to the other input of the set of logic gates PLR, this second sub-unit SR having one first output b1 connected to the register R1, one second output a2 connected to the register R6 and one third output d3 connected to the register R4,

c) the third sub-unit SS of the calculation circuit CC includes, apart from its 5 registers S0, S1, S2, S3, S4 of 7 bits, in each case an adder, modulo 127 AS, with two inputs and one output and a set of 7 exclusive-OR logic gates PLS with 2 inputs and one output, these means being interconnected as follows:

-   the set of logic gates PLS receives on one of its inputs the third initialization word SI,
-   the register S2 is connected to the output of the set of logic gates PLS,
-   the register S3 has its input connected to the register S4 and its output to the other input of the set of logic gates PLS,
-   the register S1 is connected to the register S2,
-   the register S0 is connected to the register S1,

- the adder AS has one of its inputs connected to the outputs of the register S0 after the circular shaft of two rows towards the least significant bits and the other to the register S2,

this third sub-unit SS having one first output a3 connected to the register S2, one second output b2 connected to the register S1 and a third output c1 to the register S3,
d) the fourth sub-unit ST of the calculation circuit includes, apart from its 7 registers T0, T1, T2, T3, T4, T5, T6 of 7 bits, in each case an adder, modulo 127 AT, with two inputs and one output and a set of exclusive-OR logic gates PLT with 2 inputs and one output, these means being interconnected as follows:

- the set of logic gates PLT receives on one of its inputs the fourth initialization word TI,
- the register T1 is connected to the output of the set of logic gates PLT,
- the register T0 is connected to the register T1,
- the adder AT has one of its inputs connected to the outputs of the register T0 after the circular shift of one row towards the most significant bits and the other input connected to the register T1,
- the register T6 is connected to the output of the adder AT,
- the register T5 is connected to the register T6,
- the register T4 is connected to the register T5,
- the register T3 is connected to the register T4,
- the register T2 has its input connected to the register T3 and its output to the other input of the set of logic gates PLT,

this fourth sub-unit ST having one first output b3 connected to the output of the register T1, one second output c2 connected to the register T6 and one third output d1 connected to the register T3.

4. Generator according to claim 1, characterized in that the byte On delivered by the output logic circuit is noted 0 (7), 0(6), 0(5), 0(4), 0(3), 0(2), 0(1), 0(0), this logic circuit being provided with means able to form these bits via the following logical combinations where the figure in brackets indicates the row of the bit taken from the corresponding register:

$$o(0)=[S3(2).T5(0)+Q1(0).\overline{T5(0)}] \oplus [T3(2).Q3(1)+R3(1).\overline{Q3(1)}]$$

$$o(1)=[S3(3).T5(1)+Q1(1).\overline{T5(1)}] \oplus [T3(3).Q3(2)+R3(2).\overline{Q3(2)}]$$

$$o(2)=[S3(4).T5(2)+Q1(2).\overline{T5(2)}] \oplus [T3(4).Q3(3)+R3(3).\overline{Q3(3)}]$$

$$o(3)=[S3(5).T5(3)+Q1(3).\overline{T5(3)}] \oplus [T3(5).Q3(4)+R3(4).\overline{Q3(4)}]$$

$$o(4)=[Q2(1).R5(0)+S2(3).\overline{R5(0)}] \oplus [R1(1).S1(0)+T1(3).\overline{S1(0)}]$$

$$o(5)=[Q2(2).R5(1)+S2(4).\overline{R5(1)}] \oplus [R1(2).S1(1)+T1(4).\overline{S1(1)}]$$

$$o(6)=[Q2(3).R5(2)+S2(5).\overline{R5(2)}] \oplus [R1(3).S1(2)+T1(5).\overline{S1(2)}]$$

$$o(7)=[Q2(4).R5(3)+S2(6).\overline{R5(3)}] \oplus [R1(4).S1(3)+T1(6).\overline{S1(3)}]$$

5. Generator according to claim 4, characterized in that the output circuit CS includes:

- one first logic sub-unit SLQ having 3 inputs connected to the 3 outputs a1, b1, c1 of the sub-units SQ, SR, SS of the calculation circuit CC and including two AND gates P1Q, P2Q respectively receiving a1 and a2 and a2 and a3 and one OR gate P3Q having two inputs connected to the two AND gates and one output delivering a first word q of 4 bits,
- one second logic sub-unit SLR identical to the first one SLQ, P1R, P2R, P3R and connected to the outputs b1, b2, b3 of the sub-units SR, SS, ST of the calculation circuit and delivering one second word r of 4 bits,
- one third logic sub-unit SLS identical to the first one SLQ, P1S, P2S, P3S and connected to the outputs c1, c2, c3 of the sub-units SQ, SS, ST of the calculation circuit and delivering a third word s of 4 bits,
- one fourth logic sub-unit SLT identical to the first one SLQ, P1T, P2T, P3T and connected to the outputs d1, d2, d3 of the sub-units SQ, SR, ST of the calculation circuit CC and delivering one fourth word t of 4 bits,
- one first exclusive-OR logic gate PQR receiving the two words q and r and delivering a word of 4 bits constituting the most significant 4 bits 0(7), 0(6), 0(5), 0(4) of the byte On finally delivered by the generator,
- one second exclusive-OR logic gate PST receiving the two words s and t and delivering a word of 4 bits 0(3), 0(2), 0(1), 0(0) constituting the least significant 4 bits of the byte On finally delivered by the generator.

**6.** Generator according to claim 3, characterized in that the adders, modulo 31 AQ and AR respectively the adders modulo 127 AS AT are each constituted by an adder with 5 bits, respectively 7 bits, with one carry output and one carry input, said output being relooped on said input.

$In$

$CI$

$QI$  $RI$  $SI$  $TI$

$SQ$  $SR$  $SS$  $ST$

$CC$

$H$

$(Xn)$

$(Xn+1 = g(Xn, In)$

$CS$

$On = f(Xn)$

FIG. 1

FIG. 2

FIG. 5

EP 0 495 706 B1

FIG. 3 A

FIG. 3B

FIG. 4

EP 0 495 706 B1